(19) Europäisches Patentamt
European Patent Office
Office européen des brevets

(11) **EP 3 007 080 A1**

(12) **EUROPEAN PATENT APPLICATION**

(43) Date of publication:
**13.04.2016 Bulletin 2016/15**

(51) Int Cl.:
***G06F 17/30*** *(2006.01)*

(21) Application number: **14187830.6**

(22) Date of filing: **06.10.2014**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventor: **Lee, Vivian**<br>**Bracknell, Berkshire RG42 2QP (GB)**<br><br>(74) Representative: **Wilding, Frances Ward**<br>**Haseltine Lake LLP**<br>**Lincoln House, 5th Floor**<br>**300 High Holborn**<br>**London WC1V 7JH (GB)** |
| (71) Applicant: **FUJITSU LIMITED**<br>**Kawasaki-shi,**<br>**Kanagawa 211-8588 (JP)** | Remarks:<br>Amended claims in accordance with Rule 137(2) EPC. |

(54) **A document ranking apparatus, method and computer program**

(57) A document ranking apparatus for ranking electronic documents ($D_i$) on a file path of a file system taking into account relevance of the documents to a search term ($t$), the apparatus comprising: a semantic description generating module configured to generate a semantic description ($SD_i$) of a document using the document contents and to store the semantic description in a semantic description repository; a similarity-based scoring module configured to compute a similarity score based on the similarity between the semantic description of a document and the search term; a quality indicator-based scoring module configured to compute a quality score of a document based on completeness, correctness and freshness of the document; a combining module configured to accept user input for relative weighting of the similarity score and the quality score combine the resultant relatively-weighted similarity score and quality score to give a final score for a document; and a ranking module configured to rank the documents on the file path based on the final score.

**EP 3 007 080 A1**

Figure 1

**Description**

The present invention relates to document retrieval and applies primarily but not exclusively to documents including text. In the current Big Data era, enterprises (such as firms, institutions, and other organisations) produce huge quantity of documents everyday. To be able to effectively utilize the information embedded in those documents, it is very important for users to be able to retrieve the relevant ones on demand based on user requirements.

Most existing document/text retrieval techniques solely rely on indexing keywords, which uses a vector space model as the core technology base. This has advantages of its linear algebra, and allows ranking documents based on their possible relevance. However, it is a rather one-dimensional measure of a document, and does not consider the dynamism of a document, for example, a document that has been continuously edited by a team of editors within an enterprise. Furthermore, it does not enable user interactions during the ranking process.

According to an embodiment of one aspect of the invention, there is provided a document ranking apparatus for ranking electronic documents on a file path of a file system taking into account the relevance of the documents to a search term, the apparatus comprising: a semantic description generating module configured to generate a semantic description of a document using the document contents and to store the semantic description in a semantic description repository; a similarity-based scoring module configured to compute a similarity score based on the similarity between the semantic description of a document and the search term; a quality indicator-based scoring module configured to compute a quality score of a document based on completeness, correctness and freshness of the document; a combining module configured to accept user input for relative weighing of the similarity score and the quality score, and to combine the resultant relatively-weighted similarity score and quality score to give a final score for a document; and a ranking module configured to rank the documents on the file path based on the final score.

The apparatus of invention embodiments can recommend suitable documents, such as enterprise documents based on an application specific ranking list that satisfies user requirements.

The scoring and ranking methodology uses a semantic description generation to generate a list of weighted terms corresponding to the document for comparison to the search term, but also implements three types of quality checking (completeness, correctness and freshness). Furthermore, at the final stage of ranking, users are also allowed to input their weight preference over quality or relevance of the documents, thus producing the final ranking list as close to the user's own choice as possible. The methodology gives a comprehensive measure algorithm and quantifies the quality measurement so that a ranking can be produced in a more accurate manner.

The inventor has come to the realisation that a more comprehensive measure is required, that can also include quality of the documents in the enterprise domain, satisfying requirements raised by such domain users. The comprehensive measure should address both documents ranking in general and the special needs of enterprise data, such as the requirements specific to shared documents that are continuously edited or monthly invoices over the past ten years.

Preferably, the document ranking apparatus includes a quality indicator-based scoring module that is configured to compute a new quality score in real time on input of the search term. This allows a dynamic quality indicator.

The three elements making up the quality score of a document are completeness and correctness and freshness: they may be derived in any suitable way. Preferably each of the completeness, correctness and freshness of a document are expressed mathematically.

For example, the completeness of a document may be computed based on a level of non-empty sections and preferably calculated as the ratio between (the number of sections minus the number of empty sections in the document) and (the total number of sections in the document). Empty sections are more easily automatically identified than non-empty sections and hence they are counted and the non-empty sections (without content) calculated. In this scenario, a document writer may have provided headings for sections (or there may be standard sections), which are however not yet followed by content. The ratio can range from 0 to 1.

As another example, the correctness of a document may be computed based on a level of correct words in the document and preferably calculated as the ratio between the number of correct words in the document and the total number of words in the document. Alternatively, in a slightly different measure, the correctness may be calculated as (the total number of words minus the number of errors (such as spelling errors and grammatical errors)) divided by the total number of words. This ratio can also range from 0 to 1.

In order to take these two elements into account, the quality score may be computed as the average of the completeness and the correctness. Alternatively, the elements could be weighted so that either completeness or correctness has a greater effect on the quality score. This weighting could be user selected.

The quality score includes the document freshness, which is a measure of how up-to-date a document is, often indicated by its last date of modification. It is likely that a more recently modified document is more valuable. This element (and any further elements) may be taken into account in any suitable way, for example to give a value between 0 and 1 which is then averaged with the values for the other elements (or computed with weighting) to give a quality score. Thus in some preferred embodiments, the quality indicator based scoring module may be configured to compute the quality score of document contents additionally based on a last modified date of the scanned document, which is one suitable indicator of document freshness. Alternatively another measure of document freshness could be used.

This extra element may be taken into account for each search term, or only in certain circumstances (since it may be a weaker indicator of quality than completeness or correctness). Hence the last modified date may be only taken into account when two or more documents share the same quality score.

The quality score (and/or the similarity score) may produce a ranking of the documents in numerical order of scores, which may be viewed as an interim ranking.

Processing for documents below a certain quality and/or similarity ranking may be discontinued, to allow pruning, in which less relevant documents are de-selected. The user may input a pruning level (e.g. the percentage or actual numerical ranking after which a document is de-selected).

In addition to numerical scores for completeness and correctness, the third quality indicator of freshness is introduced, which may employ the metadata of last modified date to finally alter an interim quality ranking between two or more documents with the same numerical scores.

The semantic description generating module is configured to generate a semantic description ($SD_i$) using a text summarization tool to provide a semantic summary of a document, for example in the form of a list of weighted terms.

The similarity-based scoring module may use any suitable method of computing a similarity score from this semantic description and the search term. One suitable method is cosine similarity, which gives a score between 0 and 1, allowing for easy combination with the quality scoring.

A document ranking apparatus according to invention embodiments includes a combining module to combine the quality score and similarity score once they have been relatively weighted according to user input as to which score is more important. Any suitable method of combining can be used. For example simple averaging may be appropriate for the examples discussed hereinbefore, each of which is in a range between 0 and 1.

The combining module is configured to weight the similarity score and/or the quality score, via user input. This is in accordance with their relative importance to the user. For example a multiplication constant may be applied to the quality score and a different multiplication constant to the similarity score. The user may provide the weighting directly or another input made by the user may be interpreted by the apparatus to provide the weighting. For example, a verbal description of the relative importance of the attributes may be interpreted to give a weighting. The weighting may be of one or both attributes.

The various modules may operate in series or in parallel as appropriate. Preferably, the apparatus is configured so that the semantic description generator and/or the similarity based scoring module operate in parallel with the quality indicator-based scoring module. In particular the semantic description generation and acquisition of quality indicators in the similarity based scoring module may use the same document scan (or analysis) action.

Preferably, the semantic description generator is configured to generate a semantic description only if there is no semantic description already available for that document (for example on the file path or in the semantic description repository). There may be no need to generate the semantic description in all cases. In a variant, which allows only more recently stored semantic descriptions to be used, the semantic description is generated only if there is no semantic description available or the semantic description available is older than a defined age (which may be selected by the user). This variant may be appropriate in an environment in which documents on the file path are likely to be edited.

According to an embodiment of another aspect of the invention there is provided an enterprise file system including a document ranking apparatus according to any of the preceding claims. In other words, the apparatus can be an integral part of the file system.

According to an embodiment of a method aspect there is provided a document ranking method for ranking electronic documents on a file path of a file system based on the relevance of the documents to a search term, the method comprising, for each document: generating a new semantic description of the document, or accessing a semantic description of the document in a semantic description repository; storing any new semantic description of the document in the semantic description repository; computing a similarity score based on the similarity between the semantic description of the document and the search term; computing a quality score of a document based on completeness, correctness and freshness of the document contents; accepting user input for relative weighting of the similarity score and the quality score; combining the resultant relatively-weighted similarity score and quality score to give a final score for a document; and for all the documents for the file path, ranking the documents based on the final score.

This method aspect corresponds to the system aspect but includes method steps.

The document ranking method may include receiving input from a client application (or directly from a user) of the various parameters which could be user-selected as set out previously. The parameters include the search term, the file path, and weight preference of the user that allows the user to decide if they see quality of the document as more important than relevance, or vice versa.

A method according to preferred embodiments of the present invention can comprise any combination of the previous apparatus and system aspects, and in general any feature or combination of features of one aspect can be applied to any or all of the other aspects. Methods according to these further embodiments can be described as computer-implemented in that they require processing and memory capability. A GUI for user input may be included effectively as a programming component, providing a user interface in combination with input hardware and display functionality for the user and input software and/or hardware for data transfer with the document ranking apparatus and enterprise system (or other system storing the documents).

The apparatus according to preferred embodiments is described as configured or arranged to carry out certain functions. This configuration or arrangement could be by use of hardware or middleware or any other suitable system. In preferred embodiments, the configuration or arrangement is by software.

Thus according to a further aspect there is provided a program which when executed carries out the method steps according to any of the preceding method definitions or any combination thereof.

The invention can be implemented as a computer program or computer program product, i.e., a computer program tangibly embodied in an information carrier, e.g., in a non-transitory machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites.

Method steps of the invention can be performed by one or more programmable processors executing a computer program to perform functions of the invention by operating on input data and generating output. Apparatus of the invention can be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention can be performed in a different order (unless the order is required by the definition in the claim language) and still achieve desirable results.

Elements of the invention have been described using the term "module", which represents a functional part. The skilled person will appreciate that such terms and their equivalents may refer to physical parts of the apparatus/system that are spatially separate but combine to serve the function defined. Equally, the same physical parts of the system may provide two or more of the functions defined. For example, separately defined modules may be implemented using the same memory and/or processor as appropriate.

Each of the functional modules may be realised by hardware configured specifically for carrying out the functionality of the module. The functional modules may also be realised by instructions or executable program code which, when executed by a computer processing unit, cause the computer processing unit to perform the functionality attributed to the functional module. The computer processing unit may operate in collaboration with one or more of memory, storage, I/O devices, network interfaces, devices (either via an operating system or otherwise), and other components of a computing device, in order to realise the functionality attributed to the functional module. The modules may also be referred to as units, and may correspond to steps or stages of a method, program, or process.

Embodiments of the invention will now be described by way of example only, with reference to the appended figures, in which:

Figure 1 is a top-level diagram of functional components of a document ranking apparatus according to an invention embodiment;
Figure 2 is a top-level view of the method according to an invention embodiment;
Figure 3 is a view of an enterprise document system architecture according to an invention embodiment;
Figure 4 adds the process steps to the enterprise document system of Figure 4; and
Figure 5 is a hardware diagram illustrating hardware on which invention embodiments can be implemented.

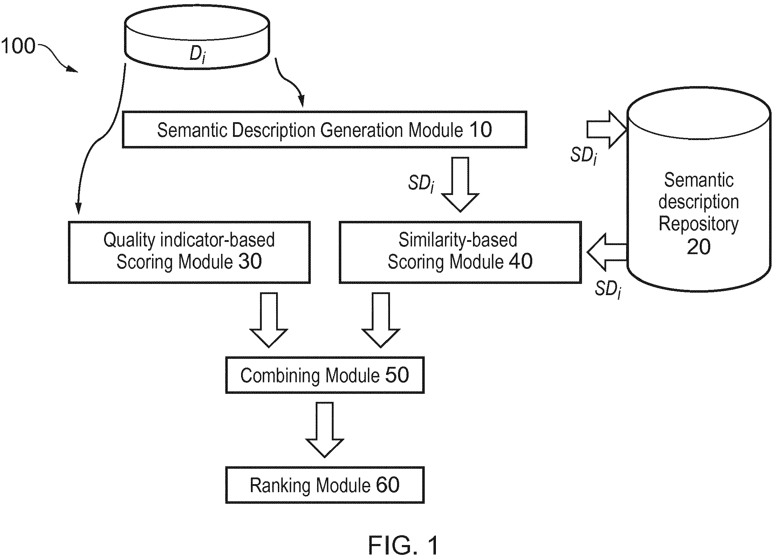

Figure 1 shows the functional modules of an invention embodiment. These include a semantic description generation module 10 for creating the semantic descriptions $SDi$, a similarity-based scoring module 40, a quality indicator-based scoring module 30, a combining module 50 and a ranking module 60. The semantic description repository 20 may be part of the apparatus 100, or provided remotely. The apparatus (and the semantic description repository) may form an integral part of an enterprise file system.

Documents $D_i$ are scanned (in the sense of analysed) for use in the semantic description module and for use in the quality-indicator based scoring module. The same scanning action may be used for both purposes, or scanning may take place separately for the different criteria used. The semantic descriptions $SDi$ are stored in the semantic description repository 20 once they have been generated. Either a stored or a new semantic description SDi, may be used for comparison with the search term *t* in the similarity-based scoring module 40 to give a similarity score. The quality indicator-based scoring module 30 provides a quality score, and the two scores are combined in the combining module 50, allowing document ranking in the ranking module 60.

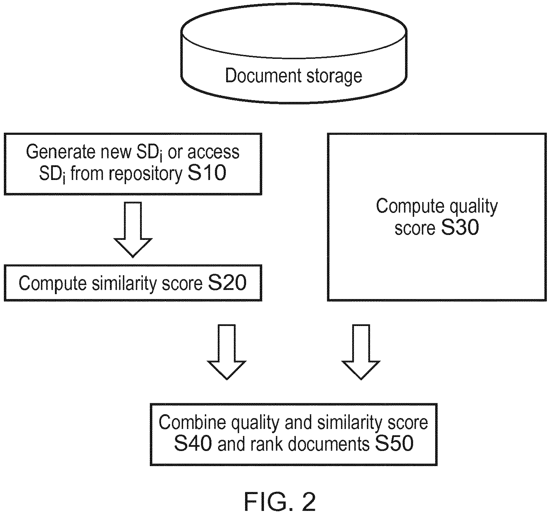

Figure 2 shows the equivalent method steps. In step S10, a new semantic description *SDi,* is generated or a stored semantic description *SDi,* is accessed for a current document. In step S20, the semantic description *SDi* is used to compute a similarity score. Potentially in parallel to either of S10 and/or S20, the quality score of the current document is computed. The two scores are combined in step S40 and the documents are ranked in step S50.

Invention embodiments can include any of the following methods:

1. A synchronised, quality indicators-enhanced screening process that can rapidly locate the most suitable document based on user requirements.
2. A semantic description and similarity scoring based <u>screening</u> mechanism
3. A document quality indicator based ranking mechanism
4. A weight based combination algorithm that takes into account both semantic closeness and quality indicator results to produce a more accurate and flexible ranking list based on user preference.

A combination of these can help to:

1. Identify most suitable document for fast and accurate candidate pruning
2. Rank documents based on the parallel screening results for both semantic similarity and quality analysis.
3. Produce different ranking result based on user's choice.

Invention embodiments are based on a working assumption that whenever a search term is presented, a file system path will also be provided. This is to minimise the search scope.

In one embodiment, when the document ranking apparatus (referred to in this section as a system) receives search requests for document selection, it proceeds as follows:

1. The document scan is initialized to produce a similarity score and a dynamic quality score.
2. For the similarity score process, two sub-processes are carried out:

   a. Within the given file path fp, the system first checks the existence of the semantic descriptions (*SD*) of each document. In the case that it does not exist, $SD_i$ will be generated using the text summarization technologies.
   b. The system computes the similarity score by using the search term *t* against the semantic descriptions to generate the initial ranking list.

3. For the dynamic quality score process, the score is generated based on three indicators: completeness, correctness, and last modified date.
4. For each of the similarity score and quality score, an interim ranking list may be generated. Further document processing may be aborted below a certain rank to prune the candidates.
5. The ranking list is finalized using a combination algorithm for the similarity and quality scores of the (remaining) candidates, with a user's weight preference.

This approach can ensure a more accurate document ranking result by introducing dynamic quality measurement at real-time and the user's weight preference.

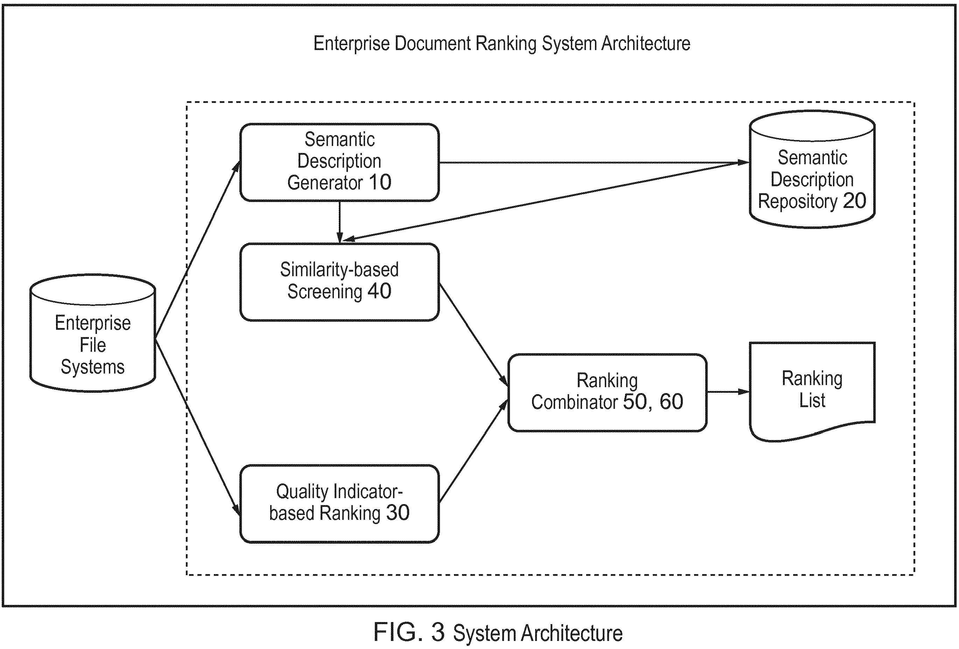

The architecture of this enterprise document ranking system is shown in Figure 3. It consists of the following main components:

- Semantic Description Generator 10
- Semantic Description Repository 20
- Similarity-based Screening 40
- Quality Indicator-based Ranking 30
- Ranking Combinator 50, 60

The functionality and processes of each of these components will be introduced in details in the following sections.

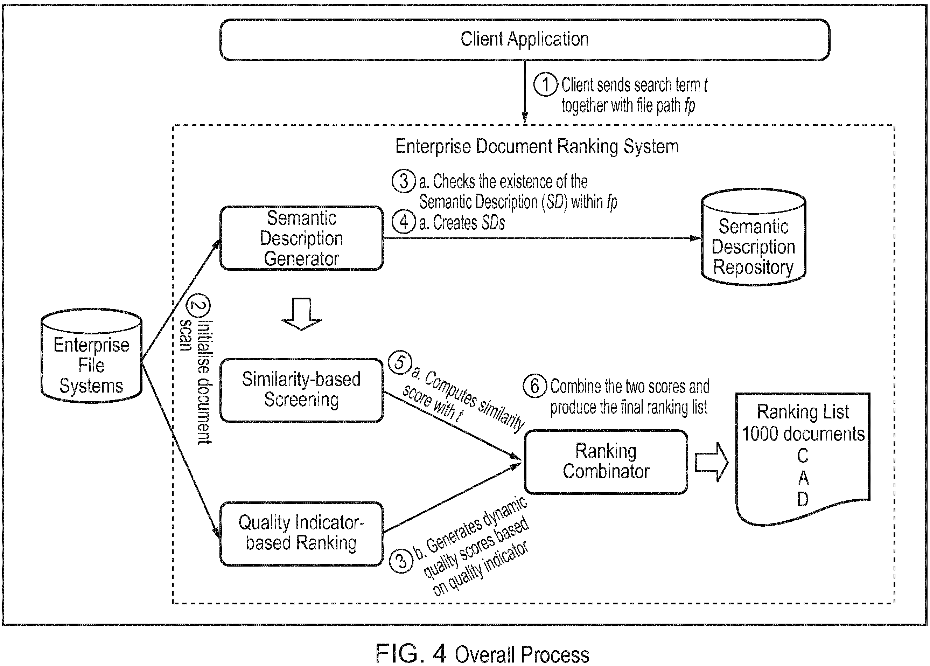

The overall process of this embodiment is illustrated in Figure 4.

There are four main processes that synchronously generate and finalise the ranking list with a given search term.

- Semantic Description Generation
- Similarity Scoring
- Dynamic Quality Scoring
- Combination Scoring

Through these steps, similarity and dynamic quality will be processed in parallel through one document scan action to minimise performance overhead, and the combination algorithm will finalise the ranking list based on user's preference.

In more detail, in (1), the client sends a search term $t$ together with a file path $fp$ to the ranking system. In (2), a document scan is initialised for both semantic description generation and quality ranking (scoring). In (3)a there is a check for the existence of a semantic description corresponding to the current document anywhere on the file path. This check is made using a standard file path and file name.

In (3)b, a dynamic quality score is generated based on quality indicators. In (4), a semantic description ($SD$) is generated. In (5) a similarity is computed using $SD_i$ and $t$. In (6) the two scores are combined to produce a final ranking list.

**Semantic Description Generator**

The main task of this component is to generate a Semantic Description ($SD_i$) for each of the document within the given file path ($fp$). A Semantic Description ($SD_i$) is a list of weighted terms that are extracted from documents $D_i$, which offers a semantic summary of the documents. There are many mature text summarization technologies available, but they are not the core technology proposed here.

For simplicity and illustrative purpose, a simple term-frequency (TF) method is applied (term-frequency is a numerical statistic which reflects how important a word is to a document in a collection or corpus, and is a type of information retrieval technique.). TF-based data summarization extracts a list of weighted terms from every $D_i$ to form the $SD_i$ The basic algorithm is to use the raw frequency of a term in a document, e.g. the number of times that term $t$ occurs in document D. Before counting the term frequency, the documents are pre-process by the standard Natural language processing (NLP), e.g. tokenization, stemming, stop words removal, etc. Here, stemming refers to reduce the words for example "fishing", "fished", "fish" to the root word "fish". Stop words removal filtered out less meaningful words like "a", "the", "of" etc.

**Semantic Description ($SD_i$) Summarization**

Before generating the $SD_i$ a list of stop words needs to be defined - some extremely common words that are less meaningful to be selected as keywords, for example, a, and, are, as, the, of, will, etc. This can be done manually if one has general knowledge about the document, otherwise, a pre-scan is needed to find out the collection frequency - the total number of times each term appears in the document, then a user takes the most frequent terms that are irrelevant to the domain of the document to form the stop words. The pre-scan is always an automatic process carried out by a program. After the stop words list is ready, the document is ready to be further processed to find out the weighted terms to form the $SD_i$.

Invention embodiments mainly target text based documents. They will be broken down into a number of terms that frequently appear in the document. These terms are essentially the keywords from the document, and hence the basis of the $SD_i$.

To reduce the processing overhead, any previously generated $SD_i$ will be stored inside the Semantic Description Repository for any future ranking process. This is possible also due to the nature that the $SD_i$ is relatively static within a time period once it is generated.

Any available text summarization tool can be applied to perform the semantic description summarization. Other standard NLP pre-processes, e.g. tokenization and stemming can be performed automatically by these tools.

**Similarity-based Screening**

This component is to create an initial ranking list, based on similarity scores.

The similarity scoring is to compute the relevance between a semantic description $SD_i$ of a document $D_i$ and a given search term $t$. This is accomplished by using the standard cosine similarity measure, which is a way of measuring the similarity between two vectors of an inner product space that measures the cosine of the angle between them. In our case, it is a mathematical way of calculating the similarity between $SD_i$ and $t$. The range of the cosine similarity value for $SD_i$ and $t$ is from 0 to 1, since the term frequencies (tf-idf weights) cannot be negative. Given $SD_i$ and search term $t$, the similarity defined by cosine similarity can be shown as follows:

$$\text{similarity}(\boldsymbol{SD_i}, \boldsymbol{t}) = \cos\left(S_{SD_i} S_t\right) = \frac{S_{SD_i} S_t}{\left|S_{SD_i}\right|\left|S_t\right|}$$

The computation result can be shown in the following table:

Table 1: Similarity Scoring

|   | $SD_1$ | $SD_2$ | $SD_3$ | ... | $SD_i$ |
|---|---|---|---|---|---|
| $t$ | 1 | 0.6 | 0.4 | ... | 0.7 |

**Quality Indicator-based Ranking**

The purpose of this component is to further refine the ranking list, based on quality indicators that are dynamically assessed at real-time upon user request. The inventor identified three main indicators to be measured:

- The completeness of a document
- The correctness of a document
- Last modified date

In order to reduce the process overhead, the quality indicator values can be acquired as a parallel process to the semantic description generation process.

**The Completeness of a Document**

This indicator uses a counter for empty sections to calculate the ratio between the non-empty sections and the total number of headings. For example, if a document contains five headings, and two sections are empty, then the completeness of the document is calculated as:

$$\text{Completeness} = (5\text{-}2)/5 = 0.6$$

The range of the completeness value should be from 0 to 1. If a document has completeness score of 1, we consider the document is complete.

**The Correctness of a Document**

The correctness can be defined by the ratio between the total number of words count, and the total word count minus number of spelling mistakes and the number of grammar errors. For example, if a document contains 1500 words, and through the document scan, we found 20 spelling errors and 5 grammar errors, then the correctness of the document can be calculated as:

$$\text{Correctness} = (1500 - \text{sum}(20,5))/1500 = 0.98$$

The value of the correctness should be from 0 to 1. If a document has correctness score of 1, we consider the document is correct.

An average calculation of the above two indicator values provides a final value of the quality of the document:

Average (completeness, correctness) = (completeness + correctness)/2

Again, the value of the average should be from 0 to 1. The closer it is to 1, the better quality the document is.

Interim ranking may be carried out as follows. Scoring is the process to produce scores and based on these scores, a ranking list can be produced. Both similarity-based screening and quality indicator based ranking can produce a interim ranking list; the purpose is to improve the performance. In a case where a file path has for example over 300 documents, and the top 50 in the ranking list are good enough to represent a typical ranking result, then both similarity-based screening and quality indicator based ranking modules can decide to abort the further process on documents after rank 50. In the case of two documents sharing the same quality score value, a third quality indicator is introduced as below.

**The Freshness of a Document**

In the case that two documents share the same or have close average quality value, a further check is done on the document's metadata for freshness, which can be judged by the last modified date. The two dates are compared; and a (comparative) ranking result is further concluded based on the theory that the later dated a document is modified, the higher ranking it will have, since a later date represents more recently updated information in the document.

A combination of the values from the three quality indicators should give us a set of best candidates that has better information quality that is close to the user requirement. Furthermore, these values are calculated at real-time when a user issues a search term; therefore, it is very likely that the values are different every time to reflect the dynamism of the proposed system.

Ranking Combinator

This component provides a weight based combination algorithm to produce a final ranking list. This can be illustrated by using the following method:

$$FinalScore(a, b) = \frac{c_1 a + c_2 b}{c_1 + c_2}$$

$c_1$ and $c_2$ are constants, a is the result from the similarity screening, and b is the result from the quality indicator based ranking. Depending on user requirement, if the similarity between the documents and the search term t is more important than the quality of the documents, then the user should choose $c_1 > c_2$. If they are equally important, then $c_1 = c_2$ is preferable. Otherwise, $c_1 < c_2$ is the right weight. With the user's own preference and intervention, the result is closer to the user's requirement at system run time.

By comparing the final scores among all the documents, a final ranking list can be generated accordingly. The value range of the final score is still between 0 and 1.

The ranking result produced by this combination method not only guarantees the overall quality of the ranking outcome, but also gives users flexibility to have different results based on their preference at runtime.

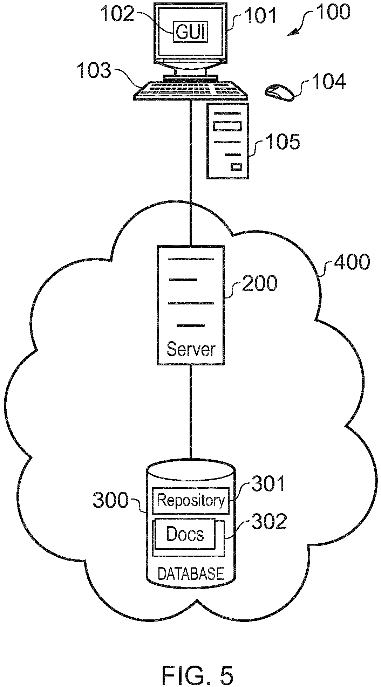

Figure 5 is a schematic diagram illustrating components of hardware that can be used with invention embodiments. In one scenario, the apparatus 100 of invention embodiments can be brought into effect on a simple stand-alone PC or terminal shown in Figure 5. The terminal comprises a monitor 101, shown displaying a GUI 102, a keyboard 103, a mouse 104 and a tower 105 housing a CPU, RAM, one or more drives for removable media as well as other standard PC components which will be well known to the skilled person. Other hardware arrangements, such as laptops, iPads and tablet PCs in general could alternatively be provided. The software for carrying out the method of invention embodiments as well as documents 302 from a file system and any other file (such as semantic descriptions from a remote semantic description repository 301) required may be downloaded from one or more databases, for example over a network such as the internet, or using removable media. Any modified file can be written onto removable media or downloaded over a network.

As mentioned above, the PC may act as a terminal and use one or more servers 200 to assist in carrying out the methods of invention embodiments. In this case, any data files and/or software for carrying out the method of invention embodiments may be accessed from database 300 over a network and via server 200. The server 200 and/or database 300 may be provided as part of a cloud 400 of computing functionality accessed over a network to provide this functionality as a service. In this case, the PC may act as a dumb terminal for display, and user input and output only. Alternatively, some or all of the necessary software may be downloaded onto the local platform provided by tower 105 from the cloud for at least partial local execution of the method of invention embodiments.

Some Potential Benefits of Invention Embodiments

Enterprises produce huge quantity of documents every day. To be able to effectively utilize the information embedded in those documents, it is very important for users to retrieve the relevant ones on demand with given requirements. Most of the document ranking techniques solely rely on indexing keywords, but do not consider the quality indicators as part of the ranking method.

Invention embodiments propose a comprehensive quality measure algorithm together with methods to quantify the quality measurement. They may be able to:

1. Identify the most suitable documents for fast and accurate candidate pruning. Cache semantic descriptions to reduce processing overhead.
2. Provide dynamic document quality analysis for enhanced ranking precision assurance.
3. Process semantic description generation and document quality indicators acquirement in parallel within one document scan action to reduce performance overhead.
4. Provide users with flexibility to have different results based on their preference at runtime using a weight based combination method.

**Claims**

1.   A document ranking apparatus for ranking electronic documents ($D_i$) on a file path of a file system taking into account relevance of the documents to a search term (t), the apparatus comprising:

a semantic description generating module configured to generate a semantic description ($SD_i$) of a document using the document contents and to store the semantic description in a semantic description repository;
a similarity-based scoring module configured to compute a similarity score based on the similarity between the semantic description of a document and the search term;
a quality indicator-based scoring module configured to compute a quality score of a document based on completeness, correctness and freshness of the document;
a combining module configured to accept user input for relative weighting of the similarity score and the quality score and to combine the resultant relatively-weighted similarity score and quality score to give a final score for a document; and
a ranking module configured to rank the documents on the file path based on the final score.

2.   A document ranking apparatus according to any of the preceding claims, wherein the quality indicator-based scoring module is configured to compute a new quality score in real time on input of the search term.

3.   A document ranking apparatus according to any of the preceding claims, wherein the completeness of a document is computed based on a level of non-empty sections and preferably based on the ratio between the number of sections minus the number of empty sections in the document and the total number of sections in the document.

4.   A document ranking apparatus according to any of the preceding claims, wherein the correctness of a document is computed based on a level of correct words in the document and preferably based on the ratio between the number of correct words in the document and the total number of words in the document.

5.   A document ranking apparatus according to any of the preceding claims, wherein the quality score is initially computed as the average of the completeness and the correctness; and wherein
the quality indicator based scoring module is configured to compute the freshness of document contents based on document freshness of the scanned document only when two or more documents share the same initially computed quality score.

6.   A document ranking apparatus according to any of the preceding claims, wherein document freshness is based on a last modified date of the scanned document..

7.   A document ranking apparatus according to any of the preceding claims, wherein the semantic description generating module is configured to generate a semantic description ($SD_i$) using a text summarization tool.

8.   A document ranking apparatus according to any of the preceding claims, wherein the similarity-based scoring module is configured to produce an interim ranking list and preferably to stop processing of documents below a predefined ranking.

9.   A document ranking apparatus according to any of the preceding claims, wherein the quality-based scoring module is configured to produce an interim ranking list and preferably to stop processing of documents below a predefined ranking.

**10.** A document ranking apparatus according to any of the preceding claims, wherein the apparatus is configured so that the semantic description generation and acquisition of quality indicators in the similarity based scoring module use the same document scan action.

**11.** A document ranking apparatus according to any of the preceding claims, wherein the semantic description generator is configured to generate a semantic description only if there is no semantic description already available for that document.

**12.** An enterprise file system including a document ranking apparatus according to any of the preceding claims.

**13.** A document ranking method for ranking electronic documents ($D_i$) on a file path of a file system based on the relevance of the documents to a search term (t), the method comprising, for each document:

> generating a new semantic description ($SD_i$) of the document, or accessing a semantic description of the document in a semantic description repository;
> storing any new semantic description of the document in the semantic description repository;
> computing a similarity score based on the similarity between the semantic description of the document and the search term;
> computing a quality score of a document based on completeness, correctness and freshness of the document contents;
> accepting user input for relative weighting of the similarity score and the quality score;
> combining the resultant relatively-weighted similarity score and quality score to give a final score for a document; and
> for all the documents for the file path, ranking the documents based on the final score.

**14.** A document ranking method according to claim 13, including receiving input of the search term and/or the file path and/or weights for the similarity score and/or the quality score from a client application.

**15.** A computer program which when executed on a computing system carries out a document ranking method for ranking electronic documents ($D_i$) on a file path of a file system based on the relevance of the documents to a search term ($t$), the method comprising, for each document:

> generating a new semantic description ($SD_i$) of the document, or accessing a semantic description of the document in a semantic description repository ;
> storing any new semantic description of the document in the semantic description repository;
> computing a similarity score based on the similarity between the semantic description of the document and the search term;
> computing a quality score of a document based on completeness, correctness and freshness of the document contents;
> accepting user input for relative weighting of the similarity score and the quality score;
> combining the resultant relatively-weighted similarity score and the quality score to give a final score for a document; and
> for all the documents for the file path, ranking the documents based on the final score.

**Amended claims in accordance with Rule 137(2) EPC.**

**1.** A document ranking apparatus (100) for ranking electronic documents ($D_i$) on a file path of a file system taking into account relevance of the documents to a search term ($t$), the apparatus comprising:

> a semantic description generating module (10) configured to generate a semantic description ($SD_i$) of a document using the document contents and to store the semantic description in a semantic description repository;
> a similarity-based scoring module (40) configured to compute a similarity score based on the similarity between the semantic description of a document and the search term;
> a quality indicator-based scoring module (30) configured to compute a quality score of a document based on completeness, correctness and freshness of the document;
> wherein the completeness of a document is computed based on a level of non-empty sections, and the correctness of a document is computed based on a total number of words in the document and a number of spelling mistakes and grammar errors.

a combining module (50) configured to accept user input for relative weighting of the similarity score and the quality score and to combine the resultant relatively-weighted similarity score and quality score to give a final score for a document; and

a ranking module (60) configured to rank the documents on the file path based on the final score.

2. A document ranking apparatus according to claim 1, wherein
the quality indicator-based scoring module (30) is configured to compute a new quality score in real time on input of the search term.

3. A document ranking apparatus according to claim 1 or 2, wherein
the completeness of a document is computed based on the ratio between the number of sections minus the number of empty sections in the document and the total number of sections in the document.

4. A document ranking apparatus according to any of the preceding claims, wherein the correctness of a document is computed based on the ratio between the number of correct words in the document and the total number of words in the document.

5. A document ranking apparatus according to any of the preceding claims, wherein the quality score is initially computed as the average of the completeness and the correctness; and wherein
the quality indicator based scoring module (30) is configured to compute the freshness of document contents based on document freshness of the scanned document only when two or more documents share the same initially computed quality score.

6. A document ranking apparatus according to any of the preceding claims, wherein document freshness is based on a last modified date of the scanned document..

7. A document ranking apparatus according to any of the preceding claims, wherein the semantic description generating module (10) is configured to generate a semantic description ($SD_i$) using a text summarization tool.

8. A document ranking apparatus according to any of the preceding claims, wherein the similarity-based scoring module (40) is configured to produce an interim ranking list and preferably to stop processing of documents below a predefined ranking.

9. A document ranking apparatus according to any of the preceding claims, wherein the quality-based scoring module (30) is configured to produce an interim ranking list and preferably to stop processing of documents below a predefined ranking.

10. A document ranking apparatus according to any of the preceding claims, wherein the apparatus is configured so that the semantic description generation and acquisition of quality indicators in the similarity based scoring module (40) use the same document scan action.

11. A document ranking apparatus according to any of the preceding claims, wherein the semantic description generator (10) is configured to generate a semantic description only if there is no semantic description already available for that document.

12. An enterprise file system including a document ranking apparatus (100) according to any of the preceding claims.

13. A document ranking method for ranking electronic documents ($D_i$) on a file path of a file system based on the relevance of the documents to a search term ($t$), the method comprising, for each document:

generating a new semantic description ($SD_i$) (S10) of the document, or accessing a semantic description of the document in a semantic description repository;

storing any new semantic description of the document in the semantic description repository;

computing a similarity score (S20) based on the similarity between the semantic description of the document and the search term;

computing a quality score (S30) of a document based on completeness, correctness and freshness of the document contents; wherein the completeness of a document is computed based on a level on non-empty sections, and the correctness of a document is computed based on a total number of words in the document and a number of spelling mistakes and grammar errors.

accepting user input for relative weighting of the similarity score and the quality score;

combining the resultant relatively-weighted similarity score and quality score (S40) to give a final score for a document; and

for all the documents for the file path, ranking the documents based on the final score (S50).

**14.** A document ranking method according to claim 13, including receiving input of the search term and/or the file path and/or weights for the similarity score (S20) and/or the quality score (S30) from a client application.

**15.** A computer program which when executed on a computing system carries out a document ranking method for ranking electronic documents ($D_i$) on a file path of a file system based on the relevance of the documents to a search term ($t$), the method comprising, for each document:

generating a new semantic description ($SD_i$) (S10) of the document, or accessing a semantic description of the document in a semantic description repository ;

storing any new semantic description of the document in the semantic description repository;

computing a similarity score (S20) based on the similarity between the semantic description of the document and the search term;

computing a quality score (S30) of a document based on completeness, correctness and freshness of the document contents; wherein the completeness of a document is computed based on a level on non-empty sections, and the correctness of a document is computed based on a total number of words in the document and a number of spelling mistakes and grammar errors.

accepting user input for relative weighting of the similarity score and the quality score;

combining the resultant relatively-weighted similarity score and the quality score (S30) to give a final score for a document; and

for all the documents for the file path, ranking the documents based on the final score (S50).

FIG. 1

Document storage

Generate new $SD_i$ or access
$SD_i$ from repository S10

Compute quality
score S30

Compute similarity score S20

Combine quality and similarity score
S40 and rank documents S50

FIG. 2

FIG. 3 System Architecture

Enterprise Document Ranking System Architecture

Semantic Description Generator 10

Semantic Description Repository 20

Similarity-based Screening 40

Enterprise File Systems

Ranking Combinator 50, 60

Ranking List

Quality Indicator-based Ranking 30

EP 3 007 080 A1

FIG. 4 Overall Process

Client Application

① Client sends search term *t* together with file path *fp*

Enterprise Document Ranking System

③ a. Checks the existence of the Semantic Description (*SD*) within *fp*
④ a. Creates *SDs*

Semantic Description Generator

Semantic Description Repository

② Initialise document scan

Enterprise File Systems

Similarity-based Screening

⑤ a. Computes similarity score with *t*

⑥ Combine the two scores and produce the final ranking list

Ranking Combinator

Quality Indicator-based Ranking

③ b. Generates dynamic quality scores based on quality indicator

Ranking List 1000 documents
C
A
D

EP 3 007 080 A1

FIG. 5

Europäisches
Patentamt

European
Patent Office

Office européen
des brevets

## EUROPEAN SEARCH REPORT

Application Number

EP 14 18 7830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 090 717 B1 (BHARAT KRISHNA [US] ET AL) 3 January 2012 (2012-01-03)<br>* column 1, line 62 - column 2, line 5 *<br>* column 3, lines 9-19 *<br>* column 4, line 48 - column 5, line 4 *<br>* column 6, lines 39-56 *<br>* column 8, lines 30-34 *<br>* column 7, line 23 - column 8, line 39 *<br>* column 11, lines 35-38 *<br>----- | 1-15 | INV.<br>G06F17/30 |
| X | US 2014/279998 A1 (BLUMENFELD DANNY [US] ET AL) 18 September 2014 (2014-09-18)<br>* paragraphs [0015], [0075], [0127], [0210], [0215]; claims 1, 14 *<br>----- | 1-15 | |
| A | US 2013/311487 A1 (MOORE JENNIFER LAUREN [US] ET AL) 21 November 2013 (2013-11-21)<br>* paragraphs [0001], [0011], [0012]; claim 1 *<br>----- | 1-15 | |
| A | US 2007/038620 A1 (KA CHONG I [US] ET AL) 15 February 2007 (2007-02-15)<br>* paragraphs [0006], [0015], [0020], [0037], [0043], [0044]; claim 11 *<br>----- | 1-15 | TECHNICAL FIELDS SEARCHED (IPC)<br><br>G06F |

The present search report has been drawn up for all claims

| Place of search | Date of completion of the search | Examiner |
|---|---|---|
| Berlin | 17 March 2015 | Haffner, Ronald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 18 7830

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2015

| Patent document cited in search report | | Publication date | Patent family member(s) | | Publication date |
|---|---|---|---|---|---|
| US 8090717 | B1 | 03-01-2012 | US<br>US | 8090717 B1<br>8843479 B1 | 03-01-2012<br>23-09-2014 |
| US 2014279998 | A1 | 18-09-2014 | US<br>US<br>US | 2014279998 A1<br>2014279999 A1<br>2014280312 A1 | 18-09-2014<br>18-09-2014<br>18-09-2014 |
| US 2013311487 | A1 | 21-11-2013 | NONE | | |
| US 2007038620 | A1 | 15-02-2007 | NONE | | |

EPO FORM P0459

For more details about this annex : see Official Journal of the European Patent Office, No. 12/82